# EUROPEAN PATENT APPLICATION

(11) **EP 4 667 179 A1**
(43) Date of publication of application: **24.12.2025**
(21) Application number: 25181673.2
(22) Date of filing: 10.06.2025
(51) Int. Cl.: B29C 31/04, B29C 43/34

(54) **PLASTIC ROAD PLATE PRODUCTION SYSTEM**

(30) Priority: 11.06.2024 BE 202405340
(71) Applicant: Indupack, 3920 Lommel (BE)
(72) Inventor: Van Baelen, Vincent, 3920 Lommel (BE)
(74) Representative: Arnold & Siedsma

(57) **Abstract**

A system for producing plastic road plates comprises a container (10) which can be filled with melted plastic, a press (30) for pressing the plastic, a positioning device (40) for positioning the container between a filling position and a pouring position, and a control device for controlling the movement of the positioning device. The container has a non-stick layer (20) which is attached only partially to the container and detaches from the container when the melted plastic is poured from the container. The control device first positions the container in the filling state for filling with plastic, and then to the pouring state for pouring the plastic from the container into the press.

## Description

The invention relates to a plastic road plate production system. The invention further relates to a method for producing plastic road plates.

A road plate is a plate which is used to make impassable roads accessible again by providing a stable ground surface. Road plates can be utilized when locations are poorly accessible. The road plates protect the ground surface and provide a hard surface for heavy equipment, vehicles and pedestrians. For this reason road plates are the perfect aid for the construction, infrastructure and event industries. The road plate can for instance be made of steel, wood-like material or plastic. The choice of material depends on the type of load, on the soil type and on the strength of the road plate.

In recent years road plates have increasingly been manufactured from plastic, since such road plates have a much lighter weight and are much more chemically resistant, and because they do not corrode or rot. In most cases the plastic road plates are produced by pressing melted plastic. In some case a location where the melted plastic is filled in is positioned relatively far from a location where melted plastic is pressed. A container is often used to displace melted plastic from one location to the other. It has however been found that, since manufacture of the plastic road plates takes place at relatively high temperatures, it is a challenge to maintain the temperature of melted plastic required for production. It has particularly been found to be challenging to pour melted plastic from the container into a press.

It is an object of the invention to provide a plastic road plate production system and a method to simplify production of plastic road plates.

According to a first aspect, a plastic road plate production system is provided. The plastic road plate production system comprises at least one container which is fillable at least partially with melted plastic. The container comprises a non-stick layer which is attached only partially to the container, resulting in a portion of the non-stick layer being detached from the container. The plastic road plate production system further comprises a press which is configured to press the melted plastic into a plastic road plate. Additionally present is a positioning device which can position the container between a filling state and a pouring state, and between a first position and a second position. An advantage thereof is that the positioning device can position the container in the filling state, at the first position, in order to fill the container at least partially with melted plastic. After filling, the control device can position the container from the first position to the second position. The control device can then position the container, at the second position, from the filling state to the pouring state, so that the melted plastic can be poured out of the container and into the press. During positioning from the filling state to the pouring state the melted plastic drops from the container together with the non-stick layer and gradually detaches from the non-stick layer. This results in an efficient and precise production process, wherein the plastic road plates can be formed easily without sticking to the container. The melted plastic detaching from the non-stick layer provides for a smooth release into the press and prevents the plastic road plates from becoming damaged during the production process. This contributes to an increased productivity and quality of the plastic road plates. When the non-stick layer is connected fixedly to the container, the melted plastic tends to stick. This may result in the formation of residue on the non-stick layer, which can be problematic for the further production of plastic road plates. The plastic peeling off the non-stick layer keeps the non-stick layer substantially free of residue. This has several advantages for the production process. Firstly, it ensures that no undesired residue sticks to the container, whereby the quality of the plastic road plates is maintained. In addition, reducing residue on the non-stick layer contributes to a more sustainable production process. Less residue means that less material is lost and less cleaning is required, this resulting in a more efficient use of resources and a reduction in waste. Keeping the non-stick layer free of residue furthermore makes it possible to continue the production process uninterrupted for a longer period of time. More road plates can hereby be produced without any cleaning or maintenance to the container being required in the interim. This increases the production capacity and provides for more efficient planning and execution of the production process.

The plastic road plate production system preferably comprises a non-stick layer which is arranged such that it forms a layer between the at least one container and the melted plastic. A non-stick layer can be understood to mean a coating or covering designed to prevent materials from sticking to each other. This layer can comprise various materials, such as teflon, silicones or other non-stick materials. Applying a non-stick layer between the container and the melted plastic provides a number of technical advantages. Firstly, the non-stick layer ensures that the melted plastic can be easily removed from the container, this making the production process more efficient. This reduces the time and effort required to produce the plastic road plates.

The plastic road plate production system preferably comprises a non-stick layer formed from a plurality of layers. A multi-layer non-stick layer can be understood to mean a coating or covering constructed from several layers of non-stick materials or materials that are not non-stick, for instance a woven cloth. Using a multi-layer non-stick layer makes the non-stick layer stronger and more durable. This increases the resistance to wear and damage, this extending the lifespan of the non-stick layer.

Provision can be made for the non-stick layer to extend along inner walls from a first side to a second side of the at least one container. An advantage of having a non-stick layer which extends along the inner walls of the container is that it helps to minimize the amount of plastic that remains stuck to the inner walls of the container during the production process. This can result in a more efficient production process because less time and fewer resources are expended to clean the container. In this way the non-stick layer contributes to optimization of the production process of plastic road plates by improving the efficiency and the quality of the final product.

The plastic road plate production system preferably comprises a non-stick layer which covers at least 50 percent of the surface area of the at least one container, preferably at least 80 percent, more preferably at least 90 percent. Such extensive coverage by the non-stick layer can help to further improve the efficiency of the production process by ensuring that even less plastic remains stuck to the container.

Provision can also be made for the non-stick layer to be a cloth. A cloth can be understood to mean a flexible piece of material, for instance made of textile. Using a cloth as non-stick layer provides the additional advantage that it can be easily arranged and replaced if necessary, this contributing to convenience of maintenance and sustainability of the system. This cloth preferably comprises at least partially a teflon layer. Teflon is known for its excellent non-stick properties and durability, which means that this layer would be highly effective in preventing plastic from sticking to the container and is simultaneously resistant to wear for a longer period of time.

The non-stick layer is preferably attached along its periphery to the upper side of at least one container. This ensures that there is no space between the edges of the container and the non-stick layer in which plastic could become stuck during the production process. In this way each addition or modification to this system contributes to further optimization by means of improved efficiency, convenience of maintenance or quality.

The plastic road plate production system preferably comprises a non-stick layer comprising a teflon or a silicone layer. Both materials are known for their excellent non-stick properties, which means that they can effectively prevent plastic from sticking to the container during the production process.

Provision can also be made for the at least one container to be made from a thermally insulating material such as wood. This can help to regulate the temperature inside the container during the production process so that the plastic remains in at least partially melted state for longer.

The plastic road plate production system can further also comprise a compressed air device for blowing air between the container and the non-stick layer. This can help to release any plastic which may be stuck.

An underpressure device which is configured to generate an underpressure between the container and the non-stick layer can also be provided. This allows the non-stick layer to be sucked back into the container in simple manner, so that the container and non-stick layer will be ready for a subsequent portion of plastic in rapid and simple manner.

The system can further also be provided with a melting device in order to melt plastic. This melting device preferably comprises a manifold unit with incorporated therein at least one nozzle and at least one valve in order to dispense melted plastic into at least one container in controlled manner. The option for control contributes to accuracy and consistency in production quality. The manifold unit can comprise a plurality of nozzles with valves in order to dispense multiple quantities of melted plastic simultaneously or alternately, as desired. In this manner each addition or modification to this system provides further optimization by means of improved efficiency, convenience of maintenance or quality.

According to a further aspect, a method for producing plastic road plates is provided. The method for producing plastic road plates comprises the following steps:
- Providing at least one container, wherein the at least one container comprises a non-stick layer which is attached only partially to the at least one container, such that a portion of the non-stick layer is detached from the at least one container;
- filling the at least one container with melted plastic at a first position,
wherein the at least one container is in a filling state;
- positioning at least one container from the first position to the second position;
- positioning the at least one container from the filling state to the pouring state at the second position, such that the melted plastic of the at least one container is poured into a press, wherein during positioning from the filling state to the pouring state the melted plastic drops from the container together with the non-stick layer and then gradually detaches from the non-stick layer;
- pressing melted plastic with the at least one press in order to produce the plastic road plate.

The method preferably further comprises the following steps of:
- applying a compressed air device;
- applying an underpressure device.

The method preferably further comprises during at least partial filling of the at least one container with melted plastic of moving the at least one container along an axis of the at least one container from a first outer end of the at least one container to a second outer end of the at least one container in a dispensing direction and in a direction opposite to the dispensing direction.

The method preferably further comprises the following step during movement of the at least one container along an axis of the at least one container: performing a movement of the at least one container along the axis of the at least one container, such that the melted plastic is distributed uniformly in the at least one container.

The above described advantages and effects similarly apply to the method.

Determined and preferred embodiments of the invention are described in the appended independent and dependent claims. Features of the dependent claims can be combined with those of independent and other dependent claims, to the extent this is applicable and not only as indicated expressly in the claims.

The above and other features, functions and advantages of the present invention will become apparent from the following detailed description in combination with the accompanying drawings, which serve by way of example of the principles of the invention. This description is given merely by way of example, without limiting the field of application of the invention. The reference numerals below refer to the accompanying drawings.

It is emphasized with specific reference to the figures that the shown special features serve only by way of example and only for illustrative discussion of the different embodiments of the present invention. They are represented with the object of providing what can be seen as the most useful and direct description of the principles and conceptual aspects of the invention. In this respect no attempt is made to show more structural details of the invention than is necessary for a fundamental understanding of the invention. The description in combination with the figures elucidates to the skilled persons in the field how the different forms of the invention can be embodied in practice.

The invention will now be further described on the basis of an exemplary embodiment shown in the drawing.

In the drawings:
figure 1 and figure 2 show schematically a plastic road plate production system according to an exemplary embodiment;
figure 3A and figure 3B show schematically a cross-section of a container according to an exemplary embodiment.

The same or similar elements are designated in the drawing with the same reference numerals.

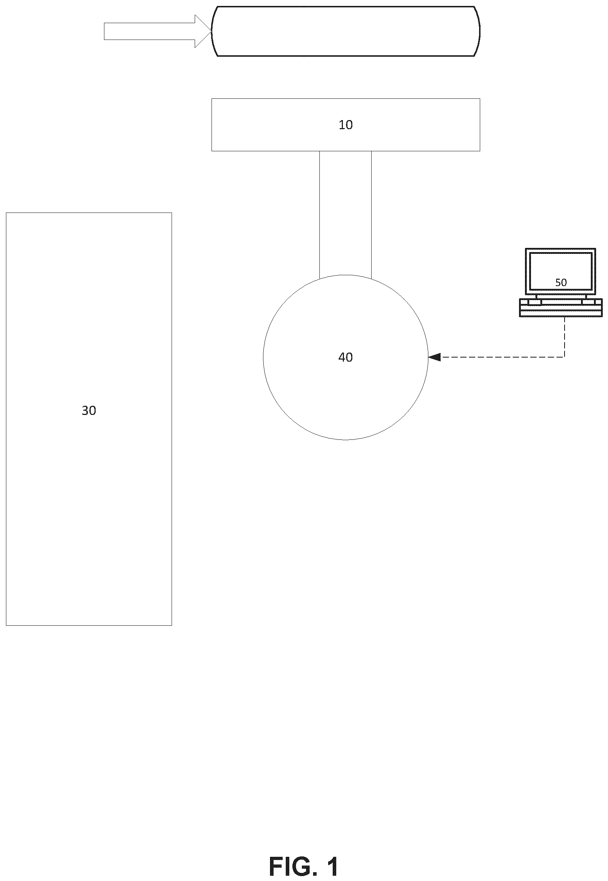

Figure 1 shows schematically a plastic road plate production system. A plastic road plate is a plastic plate which is used to install temporary roads or paths, for instance at building sites or at festivals. They are also used to protect the ground surface against heavy vehicles, such as cranes and bulldozers, or footsteps. Plastic road plates are light-weight and simple to displace and to install. They are also more durable than traditional wooden road plates, and can be reused.

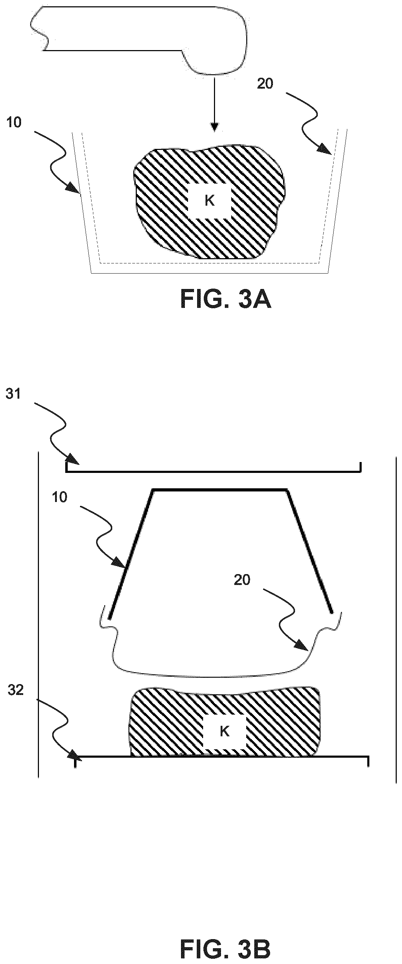

The plastic road plate production system comprises at least one container 10 which is fillable at least partially with melted plastic K, see figures 3A and 3B. It is possible for the melted plastic used for producing the plastic road plates to be recycled plastic. Recycled plastic can however contain impurities which impede the processing and may reduce the quality of the produced plastic road plates. The container 10 is an object which is used to hold the plastic. In the case of the plastic road plate production system the container 10 has been designed to be filled with melted plastic, which is then used to produce the plastic road plates. The container 10 can have different forms and dimensions and can be made from different materials, such as plastic, metal or wood. The container 10 preferably has an elongate form, wherein the length is greater than the width. Plastic road plates are typically also elongate, whereby the use of an elongate container enables the melted plastic to be distributed more uniformly in the press, as will be elucidated further. This contributes to a higher quality of the produced plastic road plates, since the uniform distribution of the melted plastic results in a uniform thickness and strength of the road plates. An example of such a container 10 can be a rectangular container. The container has upright walls and a bottom wall. The term "upright walls" can in this context be understood to mean the walls of the container 10 standing upright and holding the melted plastic. The term "bottom wall" refers to the horizontal wall on the underside of the container 10, which functions as the bottom of the container and on which the melted plastic rests, see also figures 3A and 3B. The upright walls and bottom wall of container 10 have been designed to hold the melted plastic in place and to prevent it from flowing or leaking away during the production process. An advantage of having upright walls and a bottom wall in the container is that the melted plastic protects against external influences, such as temperature fluctuations or dust and dirt particles. This contributes to a higher quality of the produced plastic road plates, since the melted plastic is in this way not affected by external factors which can alter the properties of the plastic.

The container 10 comprises a non-stick layer 20, see figures 3A and 3B, which is attached only partially to the container 10, resulting in a portion of the non-stick layer being detached from container 10. The term "non-stick layer" 20 can in this context be understood to mean a layer arranged to prevent the melted plastic from sticking to the container 10. The non-stick layer 20 is attached only partially to the container 10, which means that a part of the non-stick layer is detached from the container. The object of having a non-stick layer 20 which is attached only partially to the container is to enable the melted plastic to be removed from the container easily without this affecting the quality of the produced plastic road plates. Owing to the detached portion of the non-stick layer, the melted plastic can easily come loose from the container and find its way into the press, without remaining stuck to the container here. The force of gravity will ensure that the melted plastic will drop down together with the detached portion of the non-stick layer, see figure 3B, whereby the plastic comes loose from the container easily and can fall into the press. This contributes to an efficient and precise production process, wherein the plastic road plates can be formed easily without sticking to the container. A further technical advantage of having a container with a detached non-stick layer is that it can contribute to an improved processability of the recycled plastic.

The plastic road plate production system further comprises a press 30 which is configured to press the melted plastic into a plastic road plate. An example of a press which can be used in the plastic road plate production system is a hydraulic press. This type of press makes use of hydraulic fluids to exert pressure on the melted plastic in order to press it into the desired shape. Other examples of presses which can be used are pneumatic presses, mechanical presses and vacuum presses. Within the plastic road plate production system the press can also have different features. The press can thus for instance have a determined form in order to press the plastic road plates into a specific shape. The press can also have different dimensions and pressure levels, depending on the requirements of the production process. Another feature of the press can be the temperature control. This is of particular importance when using recycled plastic, since the temperature of the press must be adjusted in order to be able to process the impurities in the recycled plastic.

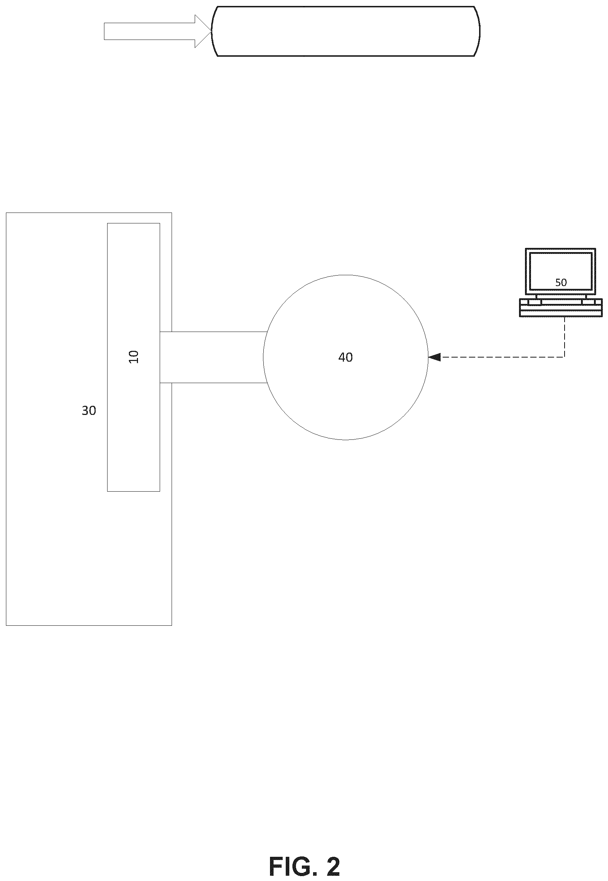

Additionally present is a positioning device 40 which can position the container 10 between a filling state and a pouring state, and between a first position and a second position. The term "positioning device" can in this context be understood to mean a mechanism which can position the container of the plastic road plate production system between different states and positions. In figure 1 the container 10 is in the first position. In figure 2 the container 10 is in the second position. The first position is rotated through about 90° relative to the second position. This means that the positioning device 40 must rotate the container 10 while the container 10 contains the melted plastic. In order to rotate the container use can be made of a motor or another mechanism that can rotate the container 10 while the melted plastic remains therein. A possible way of realizing this is to place the container 10 on or connect it to a turntable which can be driven by a motor. The turntable can be brought into the desired position by means of a positioning system, such as for instance a linear actuator or a stepping motor. The positioning system can be controlled by a computer or microcontroller in order to achieve the desired rotation angle. Another option is to mount the container on a rotating or robotic arm which can be driven by a motor. The arm can be positioned using a linear actuator or a stepping motor which is controlled by a computer or microcontroller.

In order to realize the rotation movement use can be made of different types of motor, such as a stepping motor, a DC motor or a servomotor. The motor can be controlled by means of a motor controller which can control the rotation speed and angle. If the second position lies higher or lower than the first position, the positioning device can be equipped with a linear actuator or another positioning system in order to move the container upward or downward. This can be used to bring the container to the correct height for processing the melted plastic in the second position.

In Figure 3A the container 10 can be seen in the filling state, which means that the melted plastic can be poured into the container. In Figure 3B the container 10 can be seen in the pouring state, which means that the melted plastic is poured out of the container. In order to tilt the container use can be made of a mechanism which comprises a tilting mechanism and a motor. The tilting mechanism can move the container upward or downward, while the motor sets the tilting of container 10 into action. The tilting mechanism can for instance comprise a rod or a lever which is attached to the container and which can be moved by a motor. The motor can be controlled by a computer or microcontroller in order to achieve the desired tilt angle. An example of a positioning device which can perform both a lateral, vertical and tilting movement is a robot arm which displaces the container 10 from the one position to the other position.

The positioning device 40 is required because the plastic must be arranged in the press in one single movement. This is because the dimensions of the plastic plates are so great that when the plastic is injected into the press gradually, a portion of the plastic will harden already, resulting in poor production of the plastic plates. The use of recycled plastic further renders the use of techniques such as injection moulding impossible, since there is always a chance that particles are present which may block the feed channels of the injection moulding. An advantage is that the positioning device 40 can position the container 10 in the filling state, at the first position, in order to fill the container 10 at least partially with melted plastic. After filling, the positioning device can position the container 10 from the first position to the second position. The control device can then position the container, at the second position, from the filling state to the pouring state, so that the melted plastic can be poured out of the container and into the press. During positioning from the filling state to the pouring state the melted plastic drops from the container together with the non-stick layer and gradually detaches from the non-stick layer, see figure 3B. This results in an efficient and precise production process, wherein the plastic road plates can be formed easily without the plastic sticking to the container. The melted plastic detaching from the non-stick layer provides for a smooth release into the press and prevents the container from becoming damaged during the production process, for instance by remaining residue. This contributes to an increased productivity and quality of the plastic road plates. When the non-stick layer is connected fixedly to the container, the melted plastic tends to stick. This may result in the formation of residue on the non-stick layer, which can be problematic for the further production of plastic road plates. The plastic peeling off the non-stick layer keeps the non-stick layer substantially free of residue. This has several advantages for the production process. Firstly, it ensures that no undesired residue sticks to the container, whereby the quality of the plastic road plates is maintained. In addition, reducing residue on the non-stick layer contributes to a more sustainable production process. Less residue means that less material is lost and less cleaning is required, this resulting in a more efficient use of resources and a reduction in waste. Keeping the non-stick layer free of residue furthermore makes it possible to continue the production process uninterrupted for a longer period of time. More road plates can hereby be produced without any cleaning or maintenance to the container being required in the interim. This increases the production capacity and provides for more efficient planning and execution of the production process.

The plastic road plate production system further comprises a control device 50 configured to control a movement of the positioning device. The control device can be used to control the speed, the position, the rotation angle and other parameters of the positioning device.
The control device 50 can comprise a computer or microcontroller which is programmed to control the movements of the positioning device 40 and to coordinate them with other processes in the production system. The control device 50 can also comprise sensors and feedback systems which measure the movements of the positioning device and adjust the control in order to achieve the desired results.

Figures 3A and 3B further show the co-action of the container 10 and the non-stick layer 20. As described above, non-stick layer 20 is attached only partially to the at least one container 10, such that a portion of the non-stick layer 20 is detached from the at least one container. This means that the non-stick layer 20 is not attached wholly to the container 10 and that a part of the non-stick layer therefore hangs loose from or is not attached to the container. The detached part of the non-stick layer can for instance be used to cover the inner side of the container, while the rest of the non-stick layer is attached on the outer side of the container. In other words, the non-stick layer is arranged such that the non-stick layer forms a layer between the at least one container 10 and the melted plastic. This is the portion of the non-stick layer that forms a layer between the at least one container 10 and the melted plastic which must be movable separately of container 10. The object of this construction is to prevent the melted plastic from sticking to the container. This is because, during positioning from the filling state to the pouring state, the melted plastic drops from the container 10 together with the non-stick layer 20 and the plastic gradually detaches from the non-stick layer, see figure 3B. In other words, the plastic peels off the non-stick layer 20. The melted plastic detaching from the non-stick layer provides for a smooth release into the press and prevents the container from becoming damaged during the production process, for instance by remaining residue. Figures 3A and 3B show that the non-stick layer preferably extends along inner walls from a first side to a second side of the at least one container 10. This means that the non-stick layer provides substantially full coverage of the inner walls of the container 10, which provides for an optimal protection against sticking of the melted plastic. The non-stick layer 20 covers at least 50% of the inner surface of the container 10. The non-stick layer preferably covers at least 80% of the surface of the container, and still more preferably at least 90%. The object of this construction is to cover the largest possible surface area of the container with the non-stick layer in order to prevent the melted plastic from sticking to the container. Covering more surface area of the container with the non-stick layer increases the effectiveness of the non-stick layer and prevents the melted plastic from sticking to the container.

The non-stick layer 20 is for instance a cloth or other type of woven or non-woven flexible material. An example of a flexible material which can be used for the non-stick layer is a silicone cloth. Silicone cloths have a high heat resistance and are resistant to chemical substances, making them suitable for use in the processing of melted plastic.

In order to further facilitate removal of the plastic the plastic road plate production system can further comprise a compressed air device for blowing air between the container and the non-stick layer. Blowing compressed air between the container and the non-stick layer enables an air cushion to be created, which detaches the non-stick layer from the container and makes it easier to remove the plastic. This can accelerate the production process and increase productivity.

In order to get the non-stick layer back into the container the plastic road plate production system can further comprise an underpressure device which is configured to generate an underpressure between the container and the non-stick layer. Generating an underpressure between the container and the non-stick layer enables the non-stick layer to be pulled back into the container and to be held in place. This can increase the effectiveness of the non-stick layer and prevent the melted plastic from sticking to the container. An alternative to an underpressure device could be to manually replace the non-stick layer. This may however result in more labour-intensive work and reduced productivity.

## Claims

1. A plastic road plate production system comprising:
- at least one container (10) which is fillable at least partially with melted plastic, wherein the at least one container (10) comprises a non-stick layer (20) which is attached only partially to the at least one container (10), such that a portion of the non-stick layer (20) is detached from the at least one container;
- at least one press (30) configured to press the melted plastic into a plastic road plate;
- a positioning device (40) configured to position the at least one container between a filling state and a pouring state, and between a first position and a second position;
- a control device configured to control a movement of the positioning device, such that the positioning device positions the at least one container in the filling state, at the first position, in order to fill the at least one container at least partially with melted plastic; wherein the control device is further configured to position the at least one container from the first position to the second position after filling; and wherein the control device is configured to position the at least one container, at the second position, from the filling state to the pouring state so that the melted plastic can be poured from the container into the press, wherein during positioning from the filling state to the pouring state the melted plastic drops from the container together with the non-stick layer and then gradually detaches from the non-stick layer.

2. The plastic road plate production system according to claim 1, wherein the non-stick layer is arranged such that the non-stick layer forms a layer between the at least one container (10) and the melted plastic.

3. The plastic road plate production system according to claim 2, wherein the non-stick layer is formed from a plurality of layers.

4. The plastic road plate production system according to any one of the foregoing claims, wherein the non-stick layer extends along inner walls from a first side to a second side of the at least one container (10).

5. The plastic road plate production system according to any one of the foregoing claims, wherein the non-stick layer covers at least 50 percent of the surface area of the at least one container (10), preferably at least 80 percent, more preferably at least 90 percent.

6. The plastic road plate production system according to any one of the foregoing claims, wherein the non-stick layer is a cloth.

7. The plastic road plate production system according to the foregoing claim, wherein the cloth comprises at least partially a teflon layer.

8. The plastic road plate production system according to any one of the foregoing claims, wherein the non-stick layer is attached along its periphery to the upper side of at least one container (10).

9. The plastic road plate production system according to the foregoing claim, wherein the non-stick layer is a teflon or a silicone layer.

10. The plastic road plate production system according to any one of the foregoing claims, wherein the at least one container (10) is made from a thermally insulating material, for instance wood.

11. The plastic road plate production system according to any one of the foregoing claims, wherein the plastic road plate production system further comprises a compressed air device for blowing air between the container and the non-stick layer.

12. The plastic road plate production system according to any one of the foregoing claims, wherein the plastic road plate production system further comprises an underpressure device which is configured to generate an underpressure between the container and the non-stick layer; and/or wherein the plastic road plate production system further comprises a melting device in order to melt plastic.

13. The plastic road plate production system according to the foregoing claim, wherein the melting device comprises a manifold unit comprising a manifold, at least one nozzle of the manifold and at least one valve of the at least one nozzle in order to control the dispensing speed of melted plastic into the at least one container (10), wherein the valve is adjustable between an open position and a closed position.

14. The plastic road plate production system according to any one of the foregoing claims, wherein the manifold of the manifold unit comprises at least two nozzles with at least two valves in order to fill the at least one container (10) at least partially with melted plastic, wherein the at least two valves of the at least two nozzles of the melting device are alternately adjustable between the open position and the closed position in order to control the production of plastic road plates.
